(19) Europäisches Patentamt

European Patent Office

Office européen des brevets

(11) Veröffentlichungsnummer: **0 387 423 B1**

(12) **EUROPÄISCHE PATENTSCHRIFT**

(45) Veröffentlichungstag der Patentschrift: **16.03.94**

(51) Int. Cl.⁵: **G02B 26/04**, G02B 23/24, A61B 1/04

(21) Anmeldenummer: **89124156.4**

(22) Anmeldetag: **29.12.89**

(54) **Vorrichtung zur Lichtversorgung von Endoskopen.**

(30) Priorität: **15.03.89 DE 3908366**

(43) Veröffentlichungstag der Anmeldung:
**19.09.90 Patentblatt 90/38**

(45) Bekanntmachung des Hinweises auf die
Patenterteilung:
**16.03.94 Patentblatt 94/11**

(84) Benannte Vertragsstaaten:
**CH DE FR GB LI NL**

(56) Entgegenhaltungen:
EP-A- 0 229 194    DE-A- 3 435 598
DE-A- 3 638 367    DE-A- 3 742 900
DE-A- 3 743 920    DE-C- 3 631 927
US-A- 4 807 026

(73) Patentinhaber: **Richard Wolf GmbH**
**Pforzheimer Strasse 32**
**D-75438 Knittlingen(DE)**

(72) Erfinder: **Ams, Felix**
**Gründle-Strasse 5**
**D-7539 Kämpfelbach(DE)**
Erfinder: **Vögele, Michael**
**Laierbergstrasse 39**
**D-7539 Kämpfelbach-Ersingen(DE)**

(74) Vertreter: **Wilcken, Thomas, Dipl.-Ing. et al**
**Patentanwälte**
**Wilcken & Vollmann**
**Musterbahn 1**
**D-23552 Lübeck (DE)**

# Beschreibung

Die Erfindung geht von einer Vorrichtung zur Versorgung von Endoskopen, insbesondere Video-Endoskopen, nach der DE-A-37 42 900 aus, bei der Licht einer Lichtquelle auf das proximale Lichtleiterende des Endoskops durch eine lichtundurchlässige und lichtdurchlässige Farbflächenbereiche aufweisende umlaufende Filterscheibe mit den Primärfarben zur Beleuchtung eines Objektes gestrahlt wird.

Vorrichtungen der vorerwähnten bekannten Art haben den Nachteil, daß durch die relativ lang andauernde Übergangszeit zwischen Hell- und Dunkelphase die Zeit,in der das abgestrahlte Licht seine maximale Intensität aufweist,insoweit eingeschränkt wird, daß die daraus resultierenden Lichtverluste zu einer Beeinträchtigung der Bildübertragung führen.

Die Aufgabe nach der Erfindung besteht darin, die Lichtintensität bei Vorrichtungen der eingangs erwähnten Art einer Idealkurve anzupassen, das heißt die Übergangszeit zwischen Belichtungs- zur Abdeck- bzw. Abschirmphase zu reduzieren.

Diese Aufgabe wird nach der Erfindung durch den Anspruch 1 gelöst. Durch diese Lösung wird erreicht, daß die ansteigenden und abfallenden Flanken der Beleuchtungskurve sehr steil verlaufen, weil die Übergangszeiten hell-dunkel verkürzt werden.

Die Erfindung wird nachstehend anhand der Zeichnung erläutert, in der ein Ausführungsbeispiel schematisch dargestellt ist. Es zeigen:

Figur 1    den schematischen Aufbau der Lichtversorgungseinheit in Verbindung mit einem gekuppelten, in der Ansicht schematisch dargestellten flexiblen Endoskops,

Figur 2    eine Farbfilterscheibe mit den Primärfarben rot, grün und blau,

Figur 3    das Flügelrad in einer ersten Ausführungsform,

Figur 4    das Flügelrad in einer zweiten Ausführungsform,

Figur 5    die Filterscheibe nach Fig. 2 in Zusammenarbeit mit dem Flügelrad nach Figur 3 beim Lichtdurchgang durch die Scheibe 10 und einen Ausschnitt des Flügelrades 11,

Figur 6    die Abschirmung eines Farbflächenüberganges durch einen Flügel des Flügelrades 11 ,

Figur 7    den idealen Verlauf einer Beleuchtungskurve,

Figur 8    den Verlauf einer Beleuchtungskurve ohne die Verwendung eines Flügelrades,

Figur 9    den Verlauf der Beleuchtungskurve bei Verwendung eines Flügelrades nach Fig. 3.

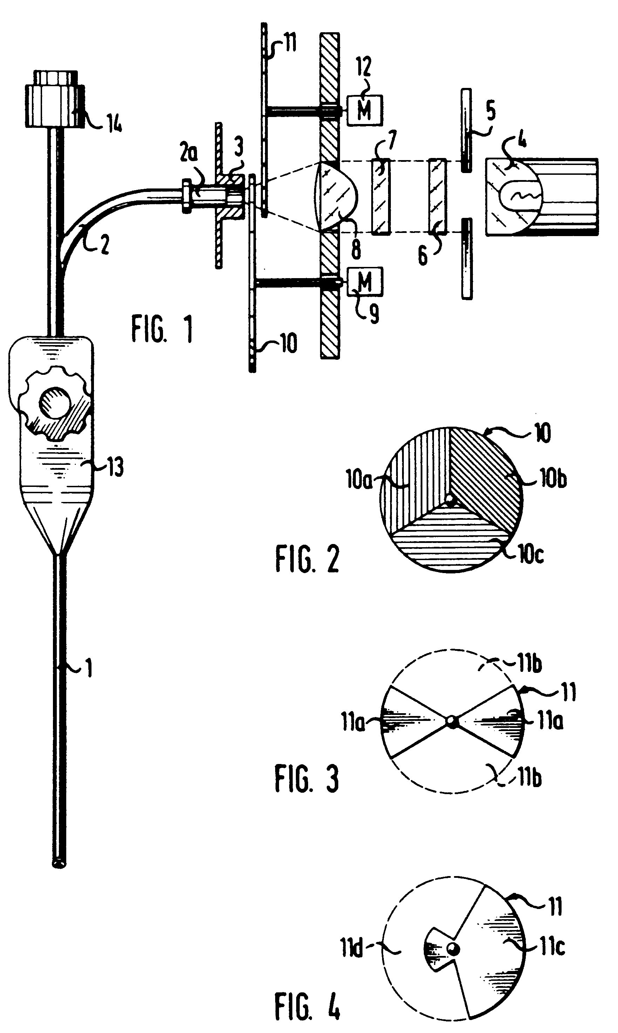

Die Vorrichtung zur Lichtversorgung von Endoskopen, insbesondere eines Video-Endoskops nach dem Schema Fig. 1,besteht aus einem flexiblen Einführungsteil 1,durch den ein Lichtleiter 2 verläuft, welcher proximal durch einen Stecker 2a mit einer Steckbuchse 3 kuppelbar ist. In das proximale Lichtleiterende strahlt das Licht einer Lichtquelle 4 über eine Blende 5, ein Infrarotfilter 6 und ein Fabrkorrekturfilter 7 durch die Fokuslinse 8 auf das proximale Lichtleiterende.

Unmittelbar vor dem proximalen Ende des gekuppelten Lichtleiters 2 liegt quer zum Lichtstrahl 15 eine durch einen Motor 9 in Umlauf versetzbare Filterscheibe 10 mit drei Primärfarbflächen 10a,10b,10c, dem ein abschirmendes Flügelrad 11 parallel zugeordnet ist, welches durch einen Motor 12 in Umdrehung versetzbar ist.

Das Licht der Lichtquelle 4 tritt über die Farbfilterscheibe 10 durch den Lichtleiter 12 am distalen Ende des Einführungsteiles 1 zur farbigen Beleuchtung eines Gegenstandes aus, dessen Bild über einen Bildleiter einem Endoskop, insbesondere einem Video-Endoskop 13 mit Multifunktionsanschluß 14 zur Versorgung des Video-Endoskops mit Luft und Spülflüssigkeit sowie zur Übertragung der Video- und Steuersignale,zugeführt wird.

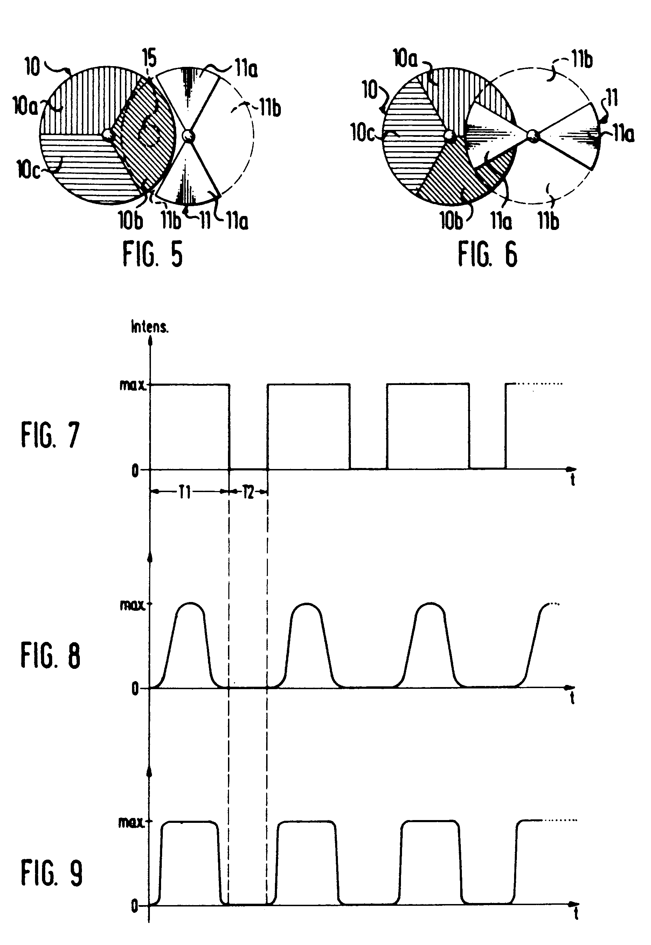

Um die Aufgabe der Erfindung zu lösen, arbeitet mit der Filterscheibe 10 nach Fig. 1 und 2 das Flügelrad 11 zusammen, welches nach Fig. 3 zwei undurchsichtige Flächenbereiche 11a und zwei Ausschnitte 11b , oder nur einen undurchsichtigen Bereich 11c sowie einen Ausschnitt 11d nach Figur 4 aufweist. Wenn die Filterscheibe 10 mit drei Primärfarben rot,grün und blau und das Filterrad nach Fig. 3 verwendet werden,so dreht die Filterscheibe 10 mit der Drehzahl $n_1$ beispielsweise entsprechend der 625-Zeilen-Norm mit $n_1$ = 1500 U/min, was einer Frequenz von 25 Vollbildern pro Sekunde entspricht. In der Ruhelage der Filterscheibe 10 und des Flügelrades 11 überdeckt ein undurchsichtiger Flächensektor 11a des Flügelrades 11 eine der drei Farbübergangszonen zwischen den drei Primärfarben (Fig. 6). Bei der Drehzahl $n_1$ der Filterscheibe 10 muß dann das Flügelrad $n_2$ = 1,5 • $n_1$ drehen, damit die Übergangszonen der Filterscheibe bei jeder Umdrehung abgedeckt werden, so daß nach jeder Abdeckung einer Übergangszone der Lichtstrahl 15 Figur 5 frei durch einen der beiden Ausschnitte 11b und einer der filternden Flächenbereiche 10a, 10b oder 10c zur Beleuchtung verwendet werden kann.

Bei der Ausführung des Flügelrades 11 nach Fig. 4 muß sich das Flügelrad 11 mit der Zahl $n_2$ = 3•$n_1$ drehen.

Allgemein gilt sodann die Formel $n_2/n_1$ = x/y oder

$$n_2 = x\frac{n_1}{y},$$

wobei x die Zahl der Filtersektoren und
y die Zahl der undurchsichtigen Flügelradsektoren 11a ist.

Durch die höhere Drehzahl des Flügelrades erhöht sich auch die Winkelgeschwindigkeit, was zu kürzeren Hell-Dunkel-Übergangszeiten und somit zu einer steileren Belichtungskurve nach Fig. 9 führt, die sich der theoretisch idealen Belichtungskurve nach Fig. 7 nähert und die eine wesentliche Verbesserung gegenüber bekannten Belichtungskurve ohne Flügelrad nach Fig. 8 ergibt.

## Patentansprüche

1. Vorrichtung zur Lichtversorgung von Endoskopen, insbesondere Video-Endoskopen, bestehen aus einer Lichtquelle (4) und einer drehend antreibbaren Filterscheibe (10) mit Filtern (10a, 10b, 10c) für den Durchlaß von Licht in drei Primärfarben, wobei die Filter (10a, 10b, 10c) beim Drehen der Filterscheibe (10) nacheinander in den Lichtstrahl (15) zwischen der Lichtquelle (4) und dem Endoskop bringbar sind, dadurch gekennzeichnet, daß ein sich mit der Filterscheibe (10) im Bereich des Lichtstrahles (15) überlappendes, mit höherer Drehzahl als die Filterscheibe (10) antreibbares Flügelrad (11) mit mindestens einem Flügel (11a, 11c) vorgesehen ist und daß die Drehzahlen und Phasenlagen der Filterscheibe (10) und des Flügelrades (11) so aufeinander abgestimmt sind, daß der Lichtstrahl (15) jeweils beim Vorbeilauf des Überganges von einem zum anderen Filter (10a, 10b, 10c) durch einen Flügel (11a, 11c) des Flügelrades (11) abgedeckt ist.

2. Vorrichtung nach Anspruch 1, dadurch gekennzeichnet, daß das Flügelrad (11) aus einer dünnen Scheibe mit einem Ausschnitt (11d) oder mehreren Ausschnitten (11b) besteht und daß die die Flügel (11a, 11c) bildenden Bereiche des Flügelrades (11) lichtundurchlässig sind.

3. Vorrichtung nach Anspruch 1, dadurch gekennzeichnet, daß das Flügelrad (11) aus einer Scheibe aus einem lichtdurchlässigen Material besteht und in den die Flügel (11a, 11c) bildenden Bereichen mit einem lichtundurchlässigen Belag versehen ist.

## Claims

1. Device for supplying light to endoscopes, in particular video endoscopes, comprising a light source (4) and a rotatably drivable filter disc (10) with filters (10a, 10b, 10c) for passage of light in three primary colours, it being possible to bring the filters (10a, 10b, 10c) one after another into the light beam (15) between the light source (4) and the endoscope when rotating the filter disc (10), characterised in that an impeller wheel (11) having at least one vane (11a, 11c) and which can be driven at a higher rotational speed than the filter disc (10) and overlaps the filter disc (10) in the region of the light beam (15) is provided, and in that the speed and phase relationships of the filter disc (10) and of the impeller wheel (11) are adapted to one another so that the light beam (15) is covered by one vane (11a, 11c) of the impeller wheel (11) every time there is a transition from one to the other filter (10a, 10b, 10c).

2. Device according to claim 1, characterised in that the impeller wheel (11) comprises a thin disc with a cut-out (11d) or several cut-outs (11b), and in that the areas of the impeller wheel (11) forming the vanes (11a, 11c) are impermeable to light.

3. Device according to claim 1, characterised in that the impeller wheel (11) comprises a disc of light-permeable material and in the regions forming the vanes (11a, 11c) is provided with a light-impermeable coating.

## Revendications

1. Dispositif d'illumination pour endoscopes, notamment des endoscopes vidéo, composé d'une source de lumière (4) et d'un disque de filtrage (10) pouvant être entraîné en rotation et comportant des filtres (10a, 10b, 10c) permettant le passage de la lumière selon trois couleurs primaires, les filtres (10a, 10b, 10c) pouvant être amenés successivement, lors de la rotation du disque de filtrage (10), dans le rayon lumineux (15) entre la source de lumière (4) et l'endoscope, caractérisé en ce qu'est prévue une roue à ailettes (11) comportant au moins une ailette (11a, 11c), pouvant être entraînée en rotation avec une vitesse de rotation plus élevée que le disque de filtrage (10), et chevauchant ce disque de filtrage (10) dans la zone du rayon lumineux (15), et en ce que les vitesses de rotation et les positions de phase du disque de filtrage (10) et de la roue à ailettes (11) sont synchronisées entre elles de manière telle, que le rayon lumineux (15), à chaque passage de la transition d'un filtre (10a, 10b, 10c) à l'autre, soit masqué par une ailette (11a, 11c) de la roue à ailettes (11).

2. Dispositif selon la revendication 1, caractérisé en ce que la roue à ailettes (11) est constituée par un disque fin comportant une découpe (11d) ou plusieurs découpes (11b), et en ce que les zones de la roue à ailettes (11), formant les ailettes (11a, 11c), sont opaques.

3. Dispositif selon la revendication 1, caractérisé en ce que la roue à ailettes (11) est constituée par un disque en un matériau transparent à la lumière, et pourvu d'un revêtement opaque, dans les zones formant les ailettes (11a, 11c).

FIG. 1

FIG. 2

FIG. 3

FIG. 4

FIG. 5

FIG. 6

FIG. 7

FIG. 8

FIG. 9